(19) Europäisches Patentamt
European Patent Office
Office européen des brevets

(11) **EP 4 528 632 A1**

(12) **EUROPEAN PATENT APPLICATION**

(43) Date of publication:
26.03.2025 Bulletin 2025/13

(21) Application number: 24200615.3

(22) Date of filing: 16.09.2024

(51) International Patent Classification (IPC):
**G06T 5/60** *(2024.01)* **G06T 5/70** *(2024.01)*

(52) Cooperative Patent Classification (CPC):
**G06T 5/70; G06T 5/60;** G06T 2207/10016;
G06T 2207/20081; G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 20.09.2023 US 202318471194

(71) Applicants:
• Disney Enterprises, Inc.
Burbank, CA 91521 (US)
• Beijing YoJaJa Software
Technology Development Co., Ltd.
Beijing 100015 (CN)
• ETH Zürich (Eidgenössische Technische
Hochschule
Zürich)
8092 Zürich (CH)

(72) Inventors:
• Djelouah, Abdelaziz
Burbank, 91521 (US)

• Zhang, Yang
Burbank, 91521 (US)
• De Albuquerque Azevedo, Roberto Gerson
Burbank, 91521 (US)
• Mansour, Elham Amin
Burbank, 91521 (US)
• Song, Mingyang
Burbank, 91521 (US)
• Schroers, Christopher Richard
Burbank, 91521 (US)
• Xue, Yuanyi
Burbank, 91521 (US)
• Labrozzi, Scott
Burbank, 91521 (US)
• Zhang, Wenhao
Beijing, 100102 (CN)
• Meng, Xuewei
Beijing, 100102 (CN)
• Schulte, Jeroen
Burbank, 91521 (US)

(74) Representative: Müller-Boré & Partner
Patentanwälte PartG mbB
Friedenheimer Brücke 21
80639 München (DE)

(54) **FILM GRAIN ANALYSIS, SYNTHESIS, AND REMOVAL**

(57) In some embodiments, a grain analysis system is configured for analyzing a first video frame and outputting respective first film grain information for film grain that is included in the first video frame or configured for analyzing a second video frame and outputting second film grain information. At least one of a grain removal system and a grain synthesis system is included. The grain removal system is configured for removing the film grain from the first video frame using the first film grain information to generate a third video frame corresponding to the first video frame with film grain removed. The grain analysis system is separate from the grain removal system. The grain synthesis system is configured for synthesizing film grain for the third video frame using the first film grain information or the second film grain information. The grain analysis system is separate from the grain synthesis system.

FIG. 1

**Description**

## BACKGROUND

Film grain may be one of the distinguishing characteristics of videos that are produced, such as in videos captured by traditional film cameras (e.g., shows or movies produced by the movie industry). Film grain may be a perceptually pleasing noise that could be illustrated with artistic intention. In video production and video restoration pipelines, film grain may be managed in different use cases. For example, film grain may be removed, and/or synthesized. The removal and synthesis processes may use separate models. These models may be trained independently to perform their respective task. Operating the synthesis and removal of film grain independently may not optimally use resources in the video production and video restoration pipeline.

## BRIEF DESCRIPTION OF THE DRAWINGS

The included drawings are for illustrative purposes and serve only to provide examples of possible structures and operations for the disclosed inventive systems, apparatus, methods and computer program products. These drawings in no way limit any changes in form and detail that may be made by one skilled in the art without departing from the spirit and scope of the disclosed implementations.

FIG. 1 depicts a simplified system for film grain analysis, removal, and synthesis according to some embodiments.

FIG. 2 depicts an example of film grain removal according to some embodiments.

FIG. 3 depicts an example of using a transformer to remove film grain from video frames according to some embodiments.

FIG. 4 depicts an example of video compression and streaming according to some embodiments.

FIG. 5 depicts an example of a film grain synthesis model of a grain synthesis system according to some embodiments.

FIG. 6 depicts an example of a system for inserting target film grain according to some embodiments.

FIG. 7 depicts an example of the grain analysis system according to some embodiments.

FIG. 8 depicts an example of a space for training the grain analysis system according to some embodiments.

FIG. 9 depicts a simplified flow chart of a method for training models of the grain analysis system, the grain removal system, the grain synthesis system according to some embodiments.

FIG. 10 illustrates one example of a computing device.

## DETAILED DESCRIPTION

Described herein are techniques for a video analysis system. In the following description, for purposes of explanation, numerous examples and specific details are set forth to provide a thorough understanding of some embodiments. Some embodiments as defined by the claims may include some or all the features in these examples alone or in combination with other features described below, and may further include modifications and equivalents of the features and concepts described herein.

System Overview

A system may use a pipeline for processing tasks related to film grain that includes a grain analysis system, a grain removal system, and a grain synthesis system. Film grain may be present in some videos, such as in shows and movies that are shot with traditional film cameras. For example, film grain may be a visible texture or pattern that appears in a video shot on film, and may appear as noise in the videos.

In some embodiments, each system may be associated with a model, such as a neural network model, which is trained to perform the associated tasks of each respective system. The grain analysis system may analyze input, such as video frames, to determine grain information of film grain that is present in the video frames. The grain information of the film grain may be used in the grain removal system and/or the grain synthesis system. For example, the grain analysis system may analyze video frames and output information for the film grain. Then, the grain removal system may remove the film grain from the video frames using the film grain information. In other processes, the grain analysis system may analyze video frames and output information for the film grain. The grain synthesis system may then use the film grain information to add film grain to video frames.

The above systems may be used in different combinations, such as in different use cases. A first combination may be used in film grain removal. For example, film grain that exists in video frames may need to be removed before further processing of the video frames. The grain analysis system may analyze video frames and output information for the film grain from the video frames. Then, the grain removal system may remove the film grain from the video frames using the film grain information.

A second combination may be used in video compression and streaming. The compression of film grain may be resource intensive and expensive in terms of bitrate. For example, compressing the film grain may increase the bitrate in random frames of a video. This may cause the streaming of the video to encounter problems, such as rebuffering when the bitrate suddenly increases. To compensate, video frames may have the film grain removed, and then the video frames are compressed. The video frames are also analyzed to determine film grain information for the film grain that is removed. The film grain information may then be sent to a receiver along with the compressed video frames. Upon decoding the video frames, the grain synthesis system at the receiver may synthesize film grain using the film grain information. The film grain is then added to the decoded video frames on the receiver side.

A third combination may be used in video editing. There may be a target film grain type that is to be added to video frames. For example, there may be video frames, such as a shot, which may not have film grain that matches a target film grain. The film grain may not match because different cameras were used or the sequence originates from other sources, such as stock footage. To perform this process, the grain removal system may remove the film grain from the video frames. Also, the grain analysis system may analyze the target video frames to determine target film grain information for the target film grain. The grain synthesis system then uses the target film grain information to synthesize the target film grain for insertion in the video frames. The video frames now have target film grain that is desired.

The above use cases may use the grain analysis system, the grain removal system, and the grain synthesis system in different ways. However, although the above three combinations are described, other combinations and use cases may be appreciated. The grain analysis system may be separated from the grain removal system and the grain synthesis system to allow the grain analysis system to be used in different combinations for different use cases. By separating the grain analysis system from the grain removal system and the grain synthesis system, the grain analysis system may be reused, which improves the use of computing resources. For example, computing resources are being used more efficiently by allowing the grain analysis system to be reused by multiple systems. Also, less storage is used because the grain analysis system does not need to be integrated in both the grain removal system and the grain synthesis system.

To optimize the above systems, different combinations of the three models of the three systems may be jointly trained. The joint training may improve the models by making them more robust as different combinations and use cases may be used during training of the different systems. Conventionally, the grain synthesis model and the grain removal model may have had an integrated grain analysis model. The grain synthesis model and the grain removal model were trained independently, such as the grain synthesis model was trained individually, or the grain removal model was trained individually. This type of training may have only focused on grain removal or grain synthesis individually. However, training different combinations of the grain analysis system, grain removal system, and grain synthesis system allows different inputs and outputs to be used to train the models of the respective systems more robustly.

System

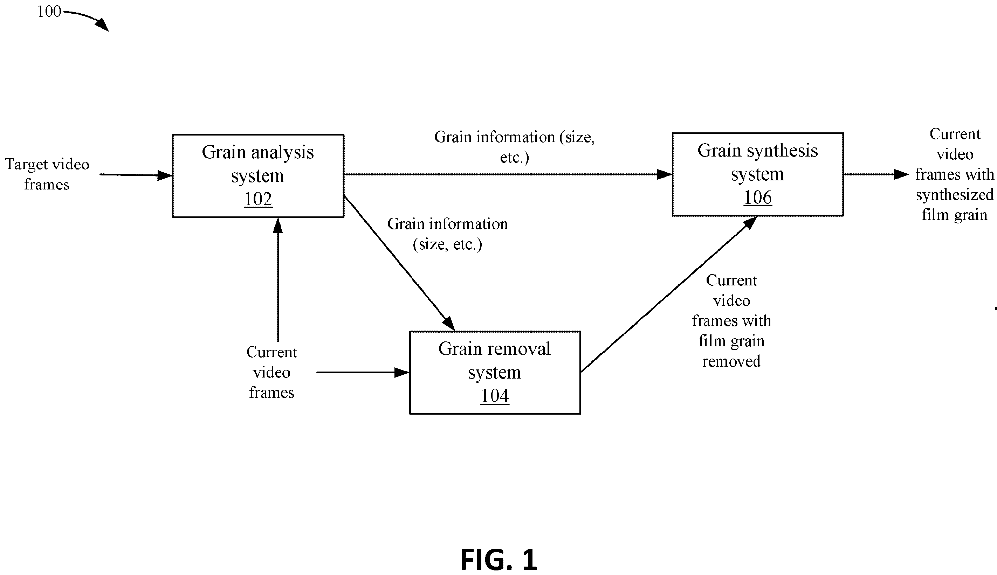

FIG. 1 depicts a simplified system 100 for film grain analysis, removal, and synthesis according to some embodiments. System 100 includes a grain analysis system 102, a grain removal system 104, and a grain synthesis system 106. In some embodiments, grain analysis system 102, grain removal system 104, and grain synthesis system 106 may use respective models. For example, grain synthesis system 102 includes a first model that is trained to analyze content, such as target video frames or current video frames, and output grain information, (e.g., size, amount, etc.). The size may be a size of the film grain, which may be measured based on grain size or pixel size. The amount may be the amount of film grain in the frame and may be measured based on the distribution and intensity of pixels in the frame. Grain removal system 104 includes a second model that is trained to receive content, such as current video frames, and remove the film grain from the current video frames. Grain synthesis system 106 includes a third model that may receive grain parameters and content, such as current video frames with the film grain removed, and synthesize film grain for inclusion in the current video frames.

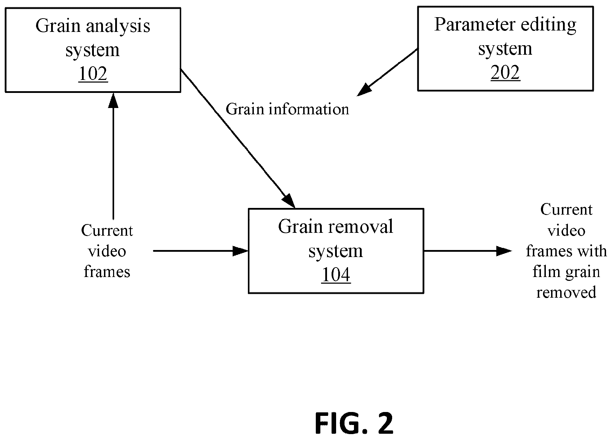

Grain analysis system 102, grain removal system 104, and grain synthesis system 106 may be used in different combinations, such as in different use cases. For example, different combinations are described in FIGs. 2, 3, and 4, for film grain removal, video compression and streaming, and film grain integration, respectively. Each use case may use one or more combinations of grain analysis system 102, grain removal system 104, and grain synthesis system 106. For example, film grain removal may use grain analysis system 102 and grain removal system 104. However, video compression and streaming and film grain integration may both use grain analysis system 102, grain removal system 104, and grain synthesis system 106. Other combinations and use cases may also be appreciated.

Grain analysis system 102, grain removal system 104, and grain synthesis system 106 may be trained jointly in different combinations. This may improve the performance of models for respective systems. For example, the joint training may improve the robustness of the models because the models are trained using different inputs and outputs. For example, the model of grain analysis system 102 may be trained jointly with grain removal system 104 and/or grain synthesis system 106. In this case, grain analysis system 102 may be trained to analyze content for grain removal scenarios and/or grain synthesis scenarios. This may train the parameters of the models more robustly in comparison to if grain analysis was integrated in the grain removal system or the grain synthesis system and these integrated models were trained individually.

The following will now describe different use cases using system 100.

Film Grain Removal

FIG. 2 depicts an example of film grain removal according to some embodiments. Film grain removal may remove film grain from current video frames that include film grain. Film grain may be removed from the current video frames for different reasons, such as film grain may be removed before streaming of the current video frames or film grain may be removed such that target film grain may be inserted thereafter.

The current video frames may be input into grain analysis system 102, which analyzes the current video frames for film grain. The current video frames may be a single frame or a sequence of frames (e.g., consecutive frames or non-consecutive frames). For example, the current video frames may be from a video, such as a show or movie. In the analysis, grain analysis system 102 may identify characteristics of the film grain that exists in the current video frames. Grain analysis system 102 may output grain information for film grain. The grain information may include interpretable parameters that are used to identify film grain, such as size and amount. The grain information may also be a latent representation of the film grain, which may be an abstract representation that captures the characteristics of film grain that is found in the video frames.

The grain information may also be edited, such as by a user. A parameter editing system 202 may allow editing of the grain information that is output by grain analysis system 102. for example, the size or amount of the grain information may be edited.

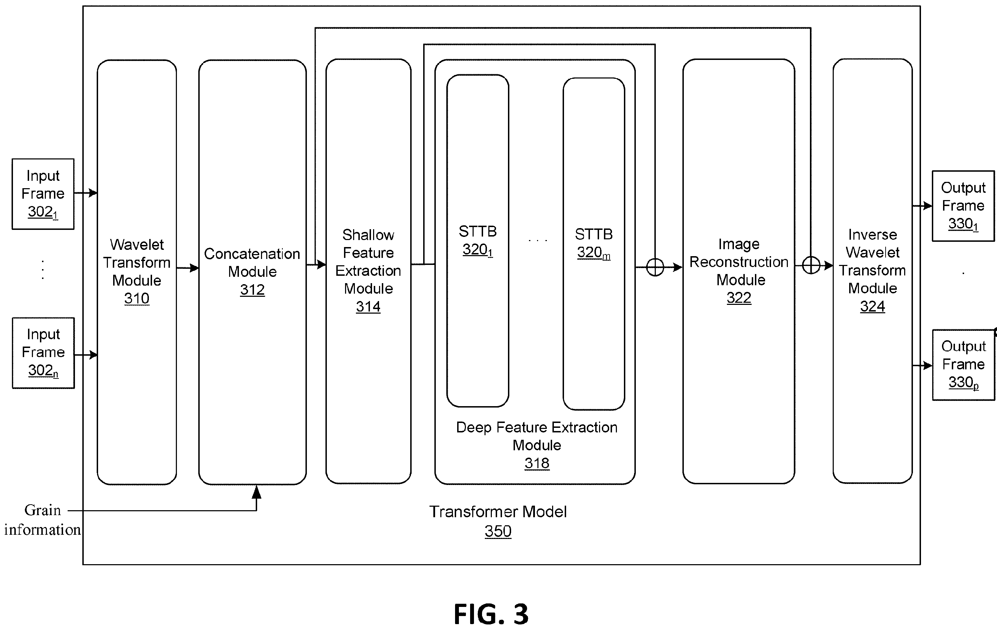

Grain removal system 104 may use the grain information to remove film grain from the current video frames. For example, grain removal system 104 may analyze the current video frames and remove film grain from the video frames that has characteristics similar to the grain information. Grain removal system 104 may use different processes to remove the film grain. In some embodiments, grain removal system 104 uses the grain information to remove the film grain using a transformer. FIG. 3 depicts an example of using a transformer to remove film grain from video frames according to some embodiments. Although this system is described, other systems may be used to remove the film grain from video frames. The transformer may be a temporally-consistent transformer model 350 for removing film grain.

Transformer model 350 includes a wavelet transform module 310, a concatenation module 312, a shallow feature extraction module 314, a deep feature extraction module 318, an image reconstruction module 322, and an inverse wavelet transform module 324. Transformer model 350 receives the current video frames as input, which may be a number of consecutive video frames $302_{1\text{-}n}$ (referred to herein collectively as current video frames 302 and individually as a current video frame 302) of a video and outputs a number of consecutive video frames $330_{1\text{-}p}$ (referred to herein collectively as output frames 330 and individually as an output frame 330). Transformer model 350 can receive any technically feasible number (e.g., five) of current video frames 302 as input and output any technically feasible number (e.g., three) of output frames 330. In some embodiments, current video frames 302 can be input into the transformer model 350 as RGB (red, green, blue) channels.

Transformer model 350 also receives the grain information from grain analysis system 102. Transformer model 350 may be trained to remove film grain (e.g., noise) from current video frames 302 based on the grain information. For example, transformer model 350 is trained with different values of grain information to remove film grain from current video frames 302. The parameters of transformer model 350 are adjusted based on the film grain removed from output frames 330 based on how the model removed film grain from output frames 330.

In some embodiments, transformer model 350 is a one-stage model that performs spatial and temporal processing simultaneously. Transformer model 350 can take a number of consecutive current video frames 302, such as $2 \times m + 1$ frames, as inputs and output a number of consecutive output frames 330, such as $2 \times n + 1$ frames. In some embodiments, processing of video frames by transformer model 350 can be expressed in the following form:

$$\{\hat{I}^t_{-n}, \hat{I}^t_{-n+1}, ..., \hat{I}^t_0, ..., \hat{I}^t_{n-1}, \hat{I}^t_n\} = \phi(\{\tilde{I}^t_{-m}, \tilde{I}^t_{-m+1}, ..., \tilde{I}^t_0, ..., \tilde{I}^t_{m-1}, \tilde{I}^t_m\}), \qquad (1)$$

where $\tilde{I}$ represents a frame from a temporal window of frames $Block^t$, which includes a set of contiguous frames and is also referred to herein as a "block" of frames, $\phi$ is transformer model 350, and $\hat{I}$ represents a processed frame of the temporal window of frames $Block^t$. Although the example of $m = 2$ and $n = 1$ is used for illustrative purposes, $m$ and $n$ can be any positive integers in embodiments. To introduce communications between neighboring temporal windows of frames, $m$ can be set to be strictly larger than $n$ so that neighboring temporal windows share multiple common input frames. Within a temporal window of frames $Block^t$, input frames can exchange information in spatial-temporal transformer (STTB) blocks $320_{1-m}$ (referred to herein collectively as STTB blocks 320 and individually as a STTB block 320) so that the output frames 330 that are output by transformer model 350 are intrinsically temporally stable. For two neighboring temporal windows of frames, slight discrepancies can exist in the output frames 330 because neighboring temporal windows share a limited number of frames in common. More specifically, flickering artifacts can exist between the temporally last output frame of the temporal window of frames $Block^t$, namely $\hat{I}^t_n$, and the temporally first output frame of the next temporal window of frames $Block^{t+1}$, namely $\hat{I}^{t+1}_{-n}$. Such flickering can be reduced or eliminated using (1) a recurrent architecture in which the temporal window of frames $Block^{t+1}$ gets one processed reference frame from the previous temporal window of frames $Block^t$, and (2) a temporal consistency loss term.

In operation, the wavelet transform module 310 decomposes each of the input frames 302 into wavelet sub-bands. Such a decomposition reduces the spatial resolution for computational efficiency purposes. In addition, the reduced spatial resolution enables much longer features, which can improve the performance of transformer model 350. In some embodiments, the wavelet transform module 310 halves the resolution of the input frames 302 to solve the problem that the size of an attention map $\text{SoftMax}(QK^T/\sqrt{D} + bias)$ in transformer model 350 is $w^2 \times w^2$, which can be a bottleneck that affects the computational efficiency of transformer model 350. The wavelet transform module 310 alleviates such a bottleneck. Although described herein primarily with respect to a wavelet transform, other types of decompositions, such as pixel shuffle, can be used in some embodiments. In some embodiments, the input frames 302 can also be warped using an optical flow that is calculated from the input frames 302 prior to performing a decomposition on the warped current video frames 302. Warping the input frames 302 using the optical flow can improve the signal-to-noise ratio of transformer model 350 relative to conventional transformer modules, which oftentimes produce pixel misalignments in the temporal domain that appear as ghosting artifacts and blurriness. In some other embodiments, features extracted from current video frames 302 can be warped rather than current video frames 302, themselves.

The concatenation module 312 concatenates the wavelet sub-bands that are output by the wavelet transform module 310 and the grain information along the channel dimension. The channel dimension includes features from different frames and the grain information. Concatenating along the channel dimension changes the input so that a transformer, shown as STTB blocks 320, fuses features spatially and temporally. The spatial and temporal fusing of features can reduce or eliminate temporal inconsistencies in the output frames 330 that are output by transformer model 350.

The shallow feature extraction module 314 includes a three-dimensional (3D) convolution layer that converts frequency channels in the concatenated sub-bands output by the concatenation module 312 into shallow features. That is, the shallow feature extraction module 314 changes the frequency of the sub-bands into features in feature space. The 3D convolution performed by the shallow feature extraction module 314 can also improve temporal fusion by the STTB blocks 320.

The deep feature extraction module 318 includes a number of STTB blocks 320. The STTB blocks 320 provide attention mechanisms that fuse features at different spatial and temporal positions of the input frames 302. In particular, the STTB blocks 320 spatially and temporally mix the features of tokens to integrate the information of the input frames 302. Each token is a patch (e.g., a 16x16 pixel patch) at a distinct position within the input frames 302. The STTB blocks 320 project features of each token to a query key and value, which acts as a feature mixer. Because the wavelet sub-bands of the input frames 302 were concatenated along the feature channel, the features also include temporal information. As a result, the feature mixing will also produce temporal mixing.

Following the STTB blocks 320 is the image reconstruction module 322, which includes another 3D convolution layer that transforms the features back into frequency space. Then, the inverse wavelet transform module 324 converts the sub-bands that are output by the 3D convolution layer into the output frames 330 that have the original resolution of current video frames 302. Output frames 330 have film grain removed according to the grain information.

The following will now describe a second use case of video compression and streaming.

Video Compression and Streaming

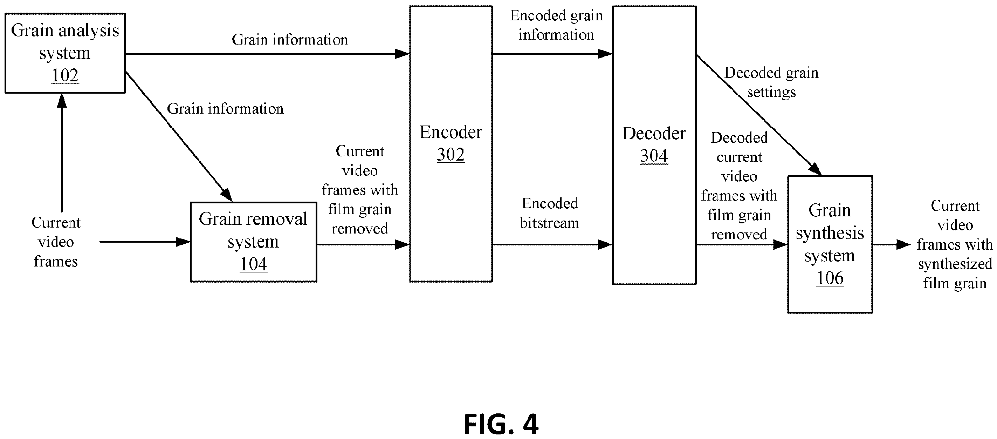

FIG. 4 depicts an example of video compression and streaming according to some embodiments. In video compression and streaming, a video may be encoded and streamed from a sender through a network to a receiver. The encoded content may be decoded and displayed at the receiver side. In some examples, a server may deliver video frames via an encoded bitstream to a client, which decodes the bitstream into video frames. In this example, a sender side includes grain analysis system 102, grain removal system 104, and encoder 302. A receiver side includes decoder 304 and grain synthesis system 106.

The film grain may be removed from the current video frames before encoding at the sender side, and the encoded bitstream may not include the film grain from the current video frames when sent from the sender to the receiver. Preserving the film grain from the current video frames in the encoded bitstream may be challenging for multiple reasons. For example, when film grain is present in the current video frames, the bitrate of the encoded bitstream may be increased. Also, the random nature of film grain in videos may cause the bitrate to randomly change as the bitrate increases for frames when film grain is encountered, which may affect the delivery of the encoded bitstream to the receiver. The random nature may affect the playback experience as the bitrate changes during the playback, which may cause re-buffering. Further, the random nature of the film grain in the video makes it difficult to predict when (e.g., which frames) and where (e.g., where in a frame) the film grain will occur in the video using prediction schemes in video coding specifications. This may cause the compression to be inefficient. Thus, the film grain may be removed from the current video frames before encoding of the current video frames. Then, the film grain may be synthesized and inserted into the decoded video frames on the receiver side.

The current video frames may be video frames for a video that may or may not include film grain. Grain analysis system 102 may analyze the current video frames to determine grain information for the film grain found in the video frames. The grain information may be input into grain removal system 104. As discussed above, grain removal system 104 may remove the film grain from the current video frames using the grain information.

An encoder 302 may encode the video frames with the film grain removed, which outputs an encoded bitstream. Also, encoder 302 may encode the grain information into encoded grain information. The encoded grain information may be sent with the encoded bitstream for the video frames or in a separate channel (e.g., two separate streams). The encoded grain information and the encoded bitstream may then be sent over a network to a decoder 304.

Decoder 304 may decode the encoded grain information and the encoded bitstream to output decoded grain information and decoded video frames. The decoded video frames have the film grain removed. Then, grain synthesis system 106 may use the decoded grain information to synthesize film grain that can be included in the decoded video frames. The synthesized film grain may then be inserted into the decoded video frames.

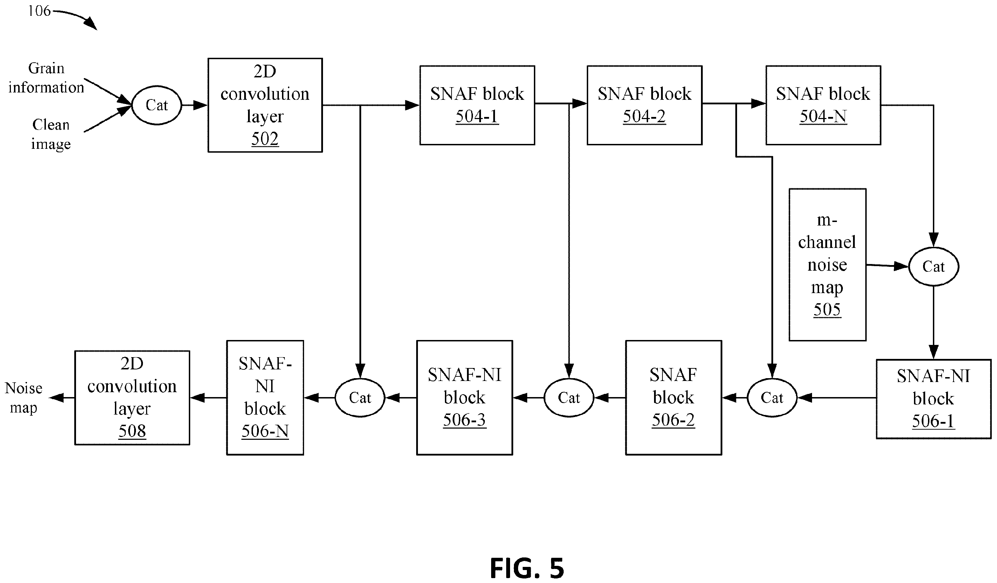

The film grain synthesis may be performed using different systems. In some embodiments, a deep generative model with noise injection may be used. FIG. 5 depicts an example of a film grain synthesis model of grain synthesis system 106 according to some embodiments. Although this model is described, other models may be used.

Grain synthesis system 106 receives a clean image and grain information (e.g., size, amount, film type, film resolution, etc.). The clean image and grain information may be concatenated as input. A convolution layer 502 extracts relevant features from the clean image. Grain synthesis system 106 extracts features from the clean input image using a control map that is based on the grain information through a series of encoder blocks. Each encoder block may be a sequence of modified Nonlinear Activation Free (NAF) blocks, which are referred to as Simple NAF (SNAF) 504-1 to 504-N. Grain synthesis system 106 then combines (e.g., concatenates) one m-channel independent and identically distributed standard normal noise map 505 to a bottleneck that contains latent features from SNAF 504-N. This serves as the initial seed for the synthetic noise that the model produces. The injected noise may be from an m-channel Gaussian noise map with the same spatial resolution as the deep features. The noise value is sampled independently in each spatial position. Grain synthesis system 106 may use a trainable scalar to control the variance of this Gaussian noise map and add it to each channel of the deep features, then use another trainable scalar to control the contribution of the noise injected deep features.

The computation then proceeds with a series of decoder blocks (SNAF-NI) 506-1 to 506-N with noise injections that gradually convert the initial noise map to the desired grain information for film grain synthesis based on the extracted features of each SNAF block 504 and the grain information. The noise injection (NI) may be placed between a convolution layer and a gating layer of each SNAF-NI block 506. SNAF-NI blocks are used as a basic block in the decoder blocks. In the process, SNAF block 504-N outputs features of the clean image and the grain information to be concatenated with the features output by SNAF-NI block 506-1. SNAF block 504-2 outputs features of the clean image and the grain information to be concatenated with the noise injected by SNAF-NI block 506-1. Also, SNAF block 504-1 outputs features of the clean image and the grain information to be concatenated with the noise injected by SNAF-NI block 506-2. Further, 2D convolution layer 502 outputs features of the clean image and the grain information to be concatenated with the noise injected by SNAF-NI block 506-3. Then, SNAF-NI block 506-N injects noise into the concatenated features. A 2D convolution layer 508 outputs the synthetic noise map from the concatenated features that are output by SNAF-NI block 504-N.

To reinforce the content dependency, grain synthesis system 106 lets the synthesizing process be conditioned on the clean features extracted in each stage, i.e., concatenating the clean features to the noise generation layers with skip connections as discussed above. Grain synthesis system 106 uses concatenation instead of addition for better separation of synthesized noises and clean features, but addition could be used or other operations. Throughout the model the image resolution may remain unchanged.

The model of grain synthesis system 106 may be trained on clean-noisy image pairs. The model predicts the residuals between the clean image and the corresponding noisy image, which is called the noise map. In order to train the model for artistic control, additional control information (e.g., size, amount, film type, film resolution, etc.) is input to grain synthesis system 106 besides the clean image. Given different conditions (e.g., size, amount, film type, film resolution, etc.), grain synthesis system 106 can generate different types of camera noise from various distributions accurately.

The following will now describe the third use case of inserting target film grain.

Film Grain Change

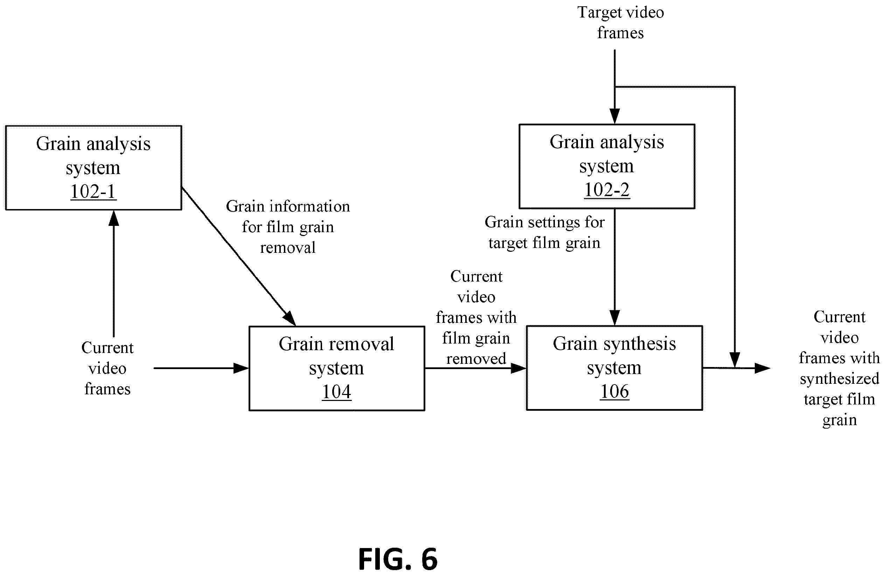

FIG. 6 depicts an example of a system for inserting target film grain according to some embodiments. In some examples, there may be a target film grain that the system should insert into current video frames. If the current video frames include film grain, the film grain may be removed before inserting the target film grain. Here, a grain analysis system 102-1 may analyze the current video frames and output grain information for film grain removal. Then, grain removal system 104 may remove the film grain from the current video frames using the grain information. The film grain removal may be similar to the process described in FIG. 2. Also, the target film grain may be inserted into video frames that did not have film grain that was removed.

The target video frames may include the target film grain that should be inserted into the current video frames. The target video frames may be analyzed to determine the target film grain. For example, grain analysis system 102-2 may receive target video frames and determine grain information for the film grain of the target video frames. The same model for grain analysis system 102 may be used to generate the grain information for removal and grain information for the target film grain.

Grain synthesis system 106 may then use the grain information for the target film grain to synthesize film grain for the current video frames that had their film grain removed. The synthesis may be similar to that described in FIGs. 4 and 5. The output of grain synthesis system 106 is current video frames with the synthesized target film grain. If the current video frames did not have film grain, then the current video frames may have the target film grain inserted without any film grain removal. Accordingly, target film grain can be inserted into video frames that either included film grain or did not include film grain.

As described above, the grain analysis may be used in different use cases and may use a model that is separated from the models of grain removal system 104 and grain synthesis system 106. The following describes the grain analysis in more detail.

Grain Analysis

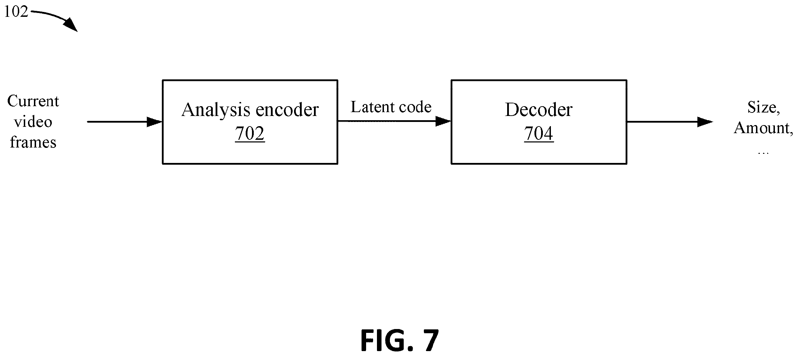

FIG. 7 depicts an example of grain analysis system 102 according to some embodiments. Grain analysis system 102 includes an analysis encoder 702 and a decoder 704. Analysis encoder 702 receives a video frame or sequence of video frames and encodes the video frames into a latent representation. The latent representation may be latent code that encodes information about film grain in the video frame. The latent code may be input into decoder 704. Decoder 704 may then decode the latent code into information for the film grain, such as parameters of size, amount, etc. The parameters may describe properties of the film grain.

Grain analysis system 102 may be trained differently. For example, a first training method, such as contrastive loss, may be performed using the latent code. A second training method, such as regression loss, may be performed using the grain information.

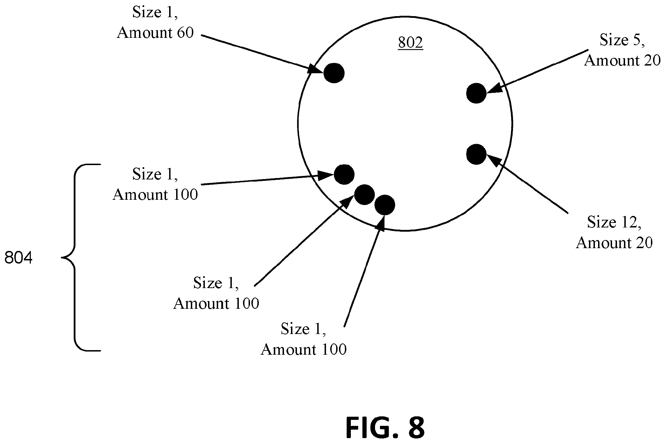

In contrastive loss, the latent code may be transformed into a position in a space. FIG. 8 depicts an example of a space 802 for training the grain analysis system according to some embodiments. For example, the input video frames may include different sizes, such as 1, 3, 5, 7, 9, and 12, and different amounts of film grain of 20, 40, 60, 80, and 100. These samples may be transformed into positions in space 802. Inputs with similar sizes and amounts should be transformed to positions close to each other in space 802.

In the training, the positions of film grain with similar values are analyzed to determine whether the latent code was accurate. That is, positions of film grain with similar values should be transformed to similar positions in space 802. For example, at 804, the three occurrences of Size 1, Amount 100 are transformed into positions in a similar area of space 802. Also, there may be a flow in space 802 as the grain values change. For example, there may be a flow in space 802 as grain sizes change from smaller sizes to larger sizes, such as from the position of a point for Size 5, amount 20 or Size 12, Amount 20 to a position of a point for Size 1, amount 60. That is, a flow in the space may be a continuous transition from smaller sizes to larger sizes.

The training process may analyze the position of space 102 for input video frames with different film grain values. Depending on the positions, contrastive loss is used to adjust the parameters of analysis encoder 702 to output different latent code to position film grain with similar values in similar positions in space 802.

Regression loss may also be used on the film grain values that are output. For example, the size, amount, etc. that are decoded by decoder 704 may be analyzed to determine if the values correspond to the film grain values from the input video frames. For example, film grain may be synthesized for the input video frames. Then, the input video frames are analyzed by analysis encoder 702 to output latent code. The latent code from analysis encoder 702 is decoded by decoder 704 into film grain values. The film grain values output by decoder 704 are compared to the film grain values that were used to synthesize the film grain on the input video frames. Regressive loss may be used to adjust the parameters for decoder 704 and/or analysis encoder 702 such that film grain values are output that are closer to the film grain values that were used to synthesize the film grain.

As mentioned above, models for grain analysis system 102, grain removal system 104 and grain synthesis system 106 may be trained together. The following describes a method of training, but other methods may be used.

Joint Training

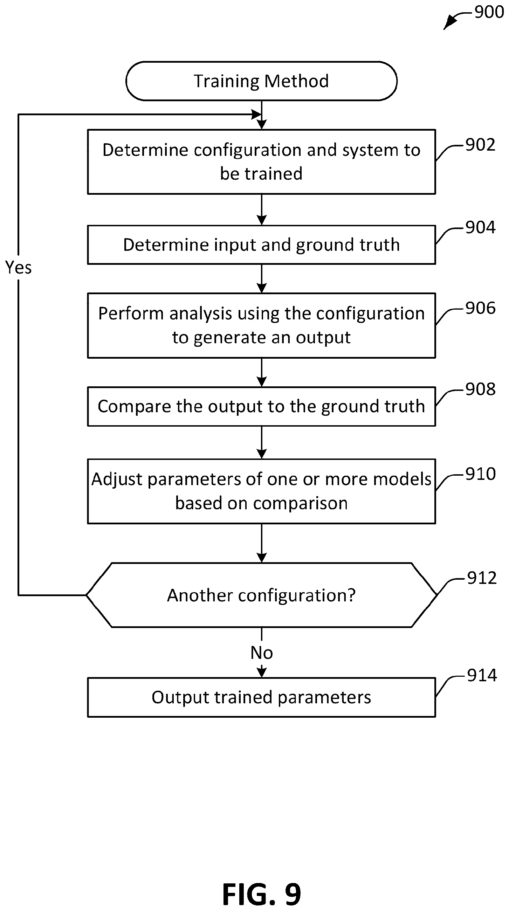

FIG. 9 depicts a simplified flow chart 900 of a method for training models of grain analysis system 102, grain removal system 104, grain synthesis system 106 according to some embodiments. At 902, a training process determines a configuration and system to be trained. For example, different combinations of grain analysis system 102, grain removal system 104, and grain synthesis system 106 may be trained jointly. In some examples, grain analysis system 102 and grain removal system 104 may be jointly trained; grain analysis system 102, grain removal system 104, and grain synthesis system 106 may be jointly trained; grain analysis system 102 and grain synthesis system 106 may be jointly trained; or other combinations may be appreciated. The configuration may determine how one or more models of the system may be trained. For example, some parameters of some models may be fixed while some parameters of other models may be trained and adjusted. Also, all parameters of the models may be trained together.

At 904, a training process determines an input and a ground truth for the input. The input may be one or more video frames and the ground truth may be the known correct output.

At 906, the training system performs an analysis using the configuration to generate an output. For example, if film grain is being removed, grain analysis system 102 and grain removal system 104 may be configured in the system. The input may be a video frame, which then has film grain synthesized and inserted in the video frame with known grain values. Grain analysis system 102 analyzes the video frames to output grain information. Then grain removal system 104 may use grain information output by grain analysis system 102 to remove film grain from the video frames.

At 908, the training process compares the output to the ground truth. In the example above, the ground truth of the film grain values for the film grain in the input video frames may be compared to the video frames without the film grain to determine the effectiveness of the removal. For example, the grain information output by grain analysis system 102 may be compared to the ground truth. Also, the video frames output by grain removal system 104 may be compared to the input frames to determine the film grain that was removed, which is then compared to the ground truth. In other examples, given a noisy input, a model for grain removal system 104 may be trained with different film grain film grain values from grain analysis system 102. The parameters of the model can be adjusted based on the amount of noise that is removed from the input. For example, the size and amount of film grain that is removed may be analyzed and parameters in models for grain analysis system 102 and/or grain removal system 104 may be adjusted to remove more and more noise from the input.

Depending on the comparison, at 910, the training process may adjust parameters of one or more models. In the above example, the parameters of grain analysis system 102, grain removal system 104, or both, may be adjusted. In some embodiments, the parameters of one of these systems may be fixed, such as grain analysis system 102, and then the parameters of the model for grain removal system 104 may be trained, or vice versa. In other embodiments, parameters of both models may be adjusted. Other configurations may also be appreciated, such as configurations that use grain analysis system 102, grain removal system 104, and grain synthesis system 106.

At 912, the training process determines if there is another configuration. For example, grain analysis system 102, grain removal system 104, and grain synthesis system 106 may be trained jointly. If there is another configuration, the process reiterates to 902 to determine the new configuration and systems to be trained.

Conclusion

Accordingly, a system is jointly trained to perform tasks in different use cases. The grain analysis, grain removal, grain synthesis may be separated into different systems that can be reused as different use cases are performed. The joint training may robustly train the different models using different use cases and configurations. This may improve the performance of models because different scenarios can be tested during training.

## System

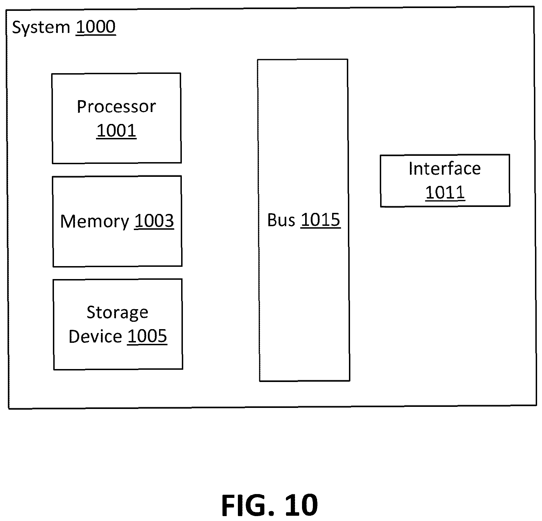

FIG. 10 illustrates one example of a computing device. According to various embodiments, a system 1000 suitable for implementing embodiments described herein includes a processor 1001, a memory module 1003, a storage device 1005, an interface 1011, and a bus 1015 (e.g., a PCI bus or other interconnection fabric.) System 1000 may operate as a variety of devices such as grain analysis system 102, grain removal system 104, and grain synthesis system 106, or any other device or service described herein. Although a particular configuration is described, a variety of alternative configurations are possible. The processor 1001 may perform operations such as those described herein. Instructions for performing such operations may be embodied in the memory 1003, on one or more non-transitory computer readable media, or on some other storage device. Various specially configured devices can also be used in place of or in addition to the processor 1001. Memory 1003 may be random access memory (RAM) or other dynamic storage devices. Storage device 1005 may include a non-transitory computer-readable storage medium holding information, instructions, or some combination thereof, for example instructions that when executed by the processor 1001, cause processor 1001 to be configured or operable to perform one or more operations of a method as described herein. Bus 1015 or other communication components may support communication of information within system 1000. The interface 1011 may be connected to bus 1015 and be configured to send and receive data packets over a network. Examples of supported interfaces include, but are not limited to: Ethernet, fast Ethernet, Gigabit Ethernet, frame relay, cable, digital subscriber line (DSL), token ring, Asynchronous Transfer Mode (ATM), High-Speed Serial Interface (HSSI), and Fiber Distributed Data Interface (FDDI). These interfaces may include ports appropriate for communication with the appropriate media. They may also include an independent processor and/or volatile RAM. A computer system or computing device may include or communicate with a monitor, printer, or other suitable display for providing any of the results mentioned herein to a user.

Any of the disclosed implementations may be embodied in various types of hardware, software, firmware, computer readable media, and combinations thereof. For example, some techniques disclosed herein may be implemented, at least in part, by non-transitory computer-readable media that include program instructions, state information, etc., for configuring a computing system to perform various services and operations described herein. Examples of program instructions include both machine code, such as produced by a compiler, and higher-level code that may be executed via an interpreter. Instructions may be embodied in any suitable language such as, for example, Java, Python, C++, C, HTML, any other markup language, JavaScript, ActiveX, VBScript, or Perl. Examples of non-transitory computer-readable media include, but are not limited to: magnetic media such as hard disks and magnetic tape; optical media such as flash memory, compact disk (CD) or digital versatile disk (DVD); magneto-optical media; and other hardware devices such as read-only memory ("ROM") devices and random-access memory ("RAM") devices. A non-transitory computer-readable medium may be any combination of such storage devices.

In the foregoing specification, various techniques and mechanisms may have been described in singular form for clarity. However, it should be noted that some embodiments include multiple iterations of a technique or multiple instantiations of a mechanism unless otherwise noted. For example, a system uses a processor in a variety of contexts but can use multiple processors while remaining within the scope of the present disclosure unless otherwise noted. Similarly, various techniques and mechanisms may have been described as including a connection between two entities. However, a connection does not necessarily mean a direct, unimpeded connection, as a variety of other entities (e.g., bridges, controllers, gateways, etc.) may reside between the two entities.

Some embodiments may be implemented in a non-transitory computer-readable storage medium for use by or in connection with the instruction execution system, apparatus, system, or machine. The computer-readable storage medium contains instructions for controlling a computer system to perform a method described by some embodiments. The computer system may include one or more computing devices. The instructions, when executed by one or more computer processors, may be configured or operable to perform that which is described in some embodiments.

As used in the description herein and throughout the claims that follow, "a", "an", and "the" include plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of some embodiments may be implemented. The above examples and embodiments should not be deemed to be the only embodiments and are presented to illustrate the flexibility and advantages of some embodiments as defined by the following claims. Based on the above disclosure and the following claims, other arrangements, embodiments, implementations, and equivalents may be employed without departing from the scope hereof as defined by the claims.

**Claims**

1. A system comprising:

   a grain analysis system configured for analyzing a first video frame and outputting respective first film grain information for film grain that is included in the first video frame or configured for analyzing a second video frame and outputting second film grain information; and
   at least one of:

   a grain removal system configured for removing the film grain from the first video frame using the first film grain information to generate a third video frame corresponding to the first video frame with film grain removed, wherein the grain analysis system is separate from the grain removal system; or
   a grain synthesis system configured for synthesizing film grain for the third video frame using the first film grain information or the second film grain information, wherein the grain analysis system is separate from the grain synthesis system.

2. The system of claim 1, wherein the grain analysis system provides the first film grain information to either the grain removal system or the grain synthesis system and the second film grain information to the grain synthesis system.

3. The system of claim 1 or 2, wherein:

   the system includes the grain removal system,
   the grain analysis system outputs the first film grain information to the grain removal system, and
   the grain removal system removes the film grain from the first video frame using the first film grain information to output the third video frame,
   wherein, optionally, the first film grain information is edited after being output by the grain analysis system and before being used by the grain removal system to remove the film grain.

4. The system of any one of claims 1 to 3, wherein the system includes the grain removal system, and the grain removal system comprises:
   a transformer configured to receive a plurality of first video frames and the first film grain information for the plurality of first video frames, and is trained to output the plurality of first video frames with film grain removed.

5. The system of claim 4, wherein the transformer is configured to perform spatial processing and temporal processing simultaneously to remove the film grain from the plurality of first video frames, wherein the temporal processing is based on temporal features from multiple first video frames in the plurality of first video frames and spatial processing is based on spatial features of a single first video frame in the plurality of first video frames.

6. The system of any one of claims 1 to 5, further comprising:

   an encoder configured to:

   encode the third video frame to generate an encoded third video frame, and
   encode the first film grain information to generate encoded first film grain information, and

   a decoder configured to decode the encoded third video frame to generate a decoded third video frame, and to decode the encoded first film grain information to generate decoded first film grain information, wherein the system includes the grain synthesis system, and the grain synthesis system synthesizes the film grain for the decoded third video frame using the decoded first film grain information.

7. The system of any one of claims 1 to 6, wherein:

   the system includes the grain removal system and the grain synthesis system,
   the grain analysis system and the grain removal system are located on a server, and
   the grain synthesis system is located on a receiver.

8. The system of any one of claims 1 to 7, wherein:

the system includes the grain synthesis system, and
the grain synthesis system injects noise into the third video frame in multiple stages to synthesize the film grain.

9. The system of claim 8, wherein the grain synthesis system comprises:

a first block configured to combine the third video frame and the first film grain information or the second film grain information to generate combined third video frame and grain information features,
a plurality of second blocks configured to extract features from the combined third video frame and grain information features; and
a plurality of third blocks configured to receive the extracted features from the plurality of second blocks, inject noise into the extracted features, and output the synthesized film grain,
wherein, optionally:

respective second blocks output extracted features that are combined with features in which noise was injected by respective third blocks,
wherein, optionally, the system further comprises:

a combination block configured to:

combine a noise map with extracted features from a second block that is last in a series of the plurality of second blocks to generate a combined noise map and extracted features, and
input the combined noise map and extracted features into a third block in a series of the plurality of third blocks.

10. The system of any one of claims 1 to 9, wherein:

the system includes the grain synthesis system, and
the grain synthesis system synthesizes the film grain for the third video frame using the second film grain information,
wherein, optionally, the second video frame includes film grain that includes characteristics for the film grain that is inserted into the third video frame.

11. The system of any one of claims 1 to 10, wherein the grain analysis system comprises:

an analysis encoder configured to analyze the first video frame or the second video frame and output latent code for the first video frame or the second video frame, and
a decoder configured to analyze the latent code and output the first film grain information or the second film grain information,
wherein, optionally, the analysis encoder and the decoder are trained to output first film grain information or second film grain information that have similar settings in a space.

12. The system of any one of claims 1 to 11, wherein:
a combination of two or more of the grain analysis system, the grain removal system, or the grain synthesis system are jointly trained together.

13. The system of any one of claims 1 to 12, wherein:

different combinations of two or more of the grain analysis system, the grain removal system, or the grain synthesis system are jointly trained together, and
different inputs and known outputs are used to train the different combinations.

14. A non-transitory computer-readable storage medium having stored thereon computer executable instructions, which when executed by a computing device, cause the computing device to be operable for:

analyzing, by a grain analysis system, a first video frame and outputting respective first film grain information for film grain that is included in the first video frame or analyzing a second video frame and outputting second film grain information; and
at least one of:

removing, by a grain removal system, the film grain from the first video frame using the first film grain information to generate a third video frame corresponding to the first video frame with film grain removed, wherein the grain analysis system is separate from the grain removal system; or

synthesizing, by a grain synthesis system, film grain for the third video frame using the first film grain information or the second film grain information, wherein the grain analysis system is separate from the grain synthesis system.

15. A method comprising:

analyzing, by a grain analysis system, a first video frame and outputting respective first film grain information for film grain that is included in the first video frame or analyzing a second video frame and outputting second film grain information; and

at least one of:

removing, by a grain removal system, the film grain from the first video frame using the first film grain information to generate a third video frame corresponding to the first video frame with film grain removed, wherein the grain analysis system is separate from the grain removal system; or

synthesizing, by a grain synthesis system, film grain for the third video frame using the first film grain information or the second film grain information, wherein the grain analysis system is separate from the grain synthesis system.

**FIG. 1**

EP 4 528 632 A1

Parameter editing system 202

Grain information

Grain analysis system 102

Current video frames

Grain removal system 104

Current video frames with film grain removed

**FIG. 2**

**FIG. 3**

FIG. 4

106 —

Grain information
Clean image

→ (Cat) → 2D convolution layer **502** → SNAF block **504-1** → SNAF block **504-2** → SNAF block **504-N**

m-channel noise map **505** → (Cat)

SNAF-NI block **506-1**

Noise map ← 2D convolution layer **508** ← SNAF-NI block **506-N** ← (Cat) ← SNAF-NI block **506-3** ← (Cat) ← SNAF block **506-2** ← (Cat) ←

**FIG. 5**

Target video
frames

| Grain analysis system 102-1 | | Grain analysis system 102-2 |

Grain information
for film grain
removal

Grain settings for
target film grain

Current
video
frames

| Grain removal system 104 | Current video frames with film grain removed | Grain synthesis system 106 | Current video frames with synthesized target film grain |

**FIG. 6**

Current
video
frames

102

Analysis encoder
702

Latent code

Decoder
704

Size,
Amount,
...

# FIG. 7

**FIG. 8**

900

```
                    ┌────────────────────────┐
                    │     Training Method     │
                    └────────────────────────┘
                              │
        ┌─────────────────────▼──────────────────────┐
        │  Determine configuration and system to     │  902
        │               be trained                    │
        └─────────────────────┬──────────────────────┘
                              │
        ┌─────────────────────▼──────────────────────┐
        │      Determine input and ground truth       │  904
        └─────────────────────┬──────────────────────┘
                              │
        ┌─────────────────────▼──────────────────────┐
Yes     │  Perform analysis using the configuration   │  906
        │          to generate an output              │
        └─────────────────────┬──────────────────────┘
                              │
        ┌─────────────────────▼──────────────────────┐
        │   Compare the output to the ground truth    │  908
        └─────────────────────┬──────────────────────┘
                              │
        ┌─────────────────────▼──────────────────────┐
        │  Adjust parameters of one or more models    │  910
        │           based on comparison               │
        └─────────────────────┬──────────────────────┘
                              │
              ╱───────────────▼────────────────╲
              │     Another configuration?      │  912
              ╲───────────────┬────────────────╱
                              │
                             No
        ┌─────────────────────▼──────────────────────┐
        │         Output trained parameters           │  914
        └─────────────────────────────────────────────┘
```

# FIG. 9

System <u>1000</u>

Processor
<u>1001</u>

Memory <u>1003</u>

Storage
Device <u>1005</u>

Bus <u>1015</u>

Interface
<u>1011</u>

**FIG. 10**

Europäisches
Patentamt

European
Patent Office

Office européen
des brevets

# EUROPEAN SEARCH REPORT

**Application Number**

EP 24 20 0615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AMEUR ZOUBIDA ET AL: "Style-based film grain analysis and synthesis", COMPUTER GRAPHICS PROCEEDINGS. ANNUAL CONFERENCE SERIES. SIGGRAPH, ACM, 2 PENN PLAZA, SUITE 701 NEW YORK NY 10121-0701 USA, 7 June 2023 (2023-06-07), pages 229-238, XP059126672, DOI: 10.1145/3587819.3590992 ISBN: 978-0-89791-227-3 | 1,2,6, 10,12-15 | INV. G06T5/60 G06T5/70 |
| Y | * section 1 * | 3-5,7-9 | |
| A | * section 3; figure 1 * | 11 | |
| | ----- | | |
| Y | ZOUBIDA AMEUR ET AL: "Deep-based Film Grain Removal and Synthesis", ARXIV.ORG, CORNELL UNIVERSITY LIBRARY, ITHACA, NY 14853, 15 June 2022 (2022-06-15), XP091251369, * section III.B; figures 1-2 * | 3,7 | |
| | ----- | | TECHNICAL FIELDS SEARCHED (IPC) |
| Y | LIANG JINGYUN ET AL: "VRT: A Video Restoration Transformer", ARXIV.ORG, CORNELL UNIVERSITY LIBRARY, ITHACA, NY 14853, 15 June 2022 (2022-06-15), pages 1-14, XP093246530, DOI: 10.48550/arXiv.2201.12288 Retrieved from the Internet: URL:https://arxiv.org/pdf/2201.12288> * section 4.4; figure 2 * | 3-5 | G06T |
| | ----- | | |
| | -/-- | | |

The present search report has been drawn up for all claims

| Place of search | Date of completion of the search | Examiner |
|---|---|---|
| Munich | 5 February 2025 | Kollreider, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 20 0615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MINGYANG SONG ET AL: "A Generative Model for Digital Camera Noise Synthesis", ARXIV.ORG, CORNELL UNIVERSITY LIBRARY, 201 OLIN LIBRARY CORNELL UNIVERSITY ITHACA, NY 14853, 16 March 2023 (2023-03-16), XP091464501, Retrieved from the Internet: URL:https://arxiv.org/abs/2303.09199v1> * sections 1, 3; figure 2 * | 8,9 | |
| L | TASSANO MATIAS ET AL: "FastDVDnet: Towards Real-Time Deep Video Denoising Without Flow Estimation", 2020 IEEE/CVF CONFERENCE ON COMPUTER VISION AND PATTERN RECOGNITION (CVPR), IEEE, 13 June 2020 (2020-06-13), pages 1351-1360, XP033804921, DOI: 10.1109/CVPR42600.2020.00143 [retrieved on 2020-08-03] * figure 1 * * incorporated in Liang Jingyun et al., 2022 * | 3-5 | **TECHNICAL FIELDS SEARCHED (IPC)** |

The present search report has been drawn up for all claims

| Place of search | Date of completion of the search | Examiner |
|---|---|---|
| Munich | 5 February 2025 | Kollreider, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)